# EUROPEAN PATENT APPLICATION

(11) **EP 4 451 213 A1**
(43) Date of publication of application: **23.10.2024**
(21) Application number: 23168801.1
(22) Date of filing: 19.04.2023
(51) Int. Cl.: G06T 7/50

(54) **DEPTH ESTIMATION FOR INTERIOR SENSING**

(71) Applicant: Aptiv Technologies AG, 8200 Schaffhausen (CH)
(72) Inventor: REHFELD, Timo, 51109 Köln (DE); HAHN, Lukas, 42113 Wuppertal (DE)
(74) Representative: Bardehle Pagenberg Partnerschaft mbB Patentanwälte Rechtsanwälte

(57) **Abstract**

The present invention relates to safety improvements for vehicles and, in particular, to methods and systems for depth estimation refinement for interior sensing. Based on image data obtained by an imaging system representing least a part of an interior of the vehicle, one or more points of interest and one or more characteristics associated with each point of interest are determined. The characteristics comprise a location and/or dimensions of each determined point of interest. Based on the determined points of interests and the associated characteristics, a reference depth map of the vehicle interior represented in the image data is generated. Further, based on the image data and the reference depth map, a refined reference depth map is generated.

## Description

### FIELD

The present disclosure generally relates to safety and control improvements for vehicles and, in particular, to methods and systems for depth estimation for interior sensing.

### BACKGROUND

Smart vehicles, such as smart cars, smart busses, and the like, are on their way to significantly improve the safety of passengers. Such smart vehicles may be equipped with on-board cameras and may be capable of capturing images of the vehicle's interior. Those images can then be used, sometimes in combination with other sensors, for different safety related tasks, such as seatbelt assistance, as well as detecting persons in the vehicle, categorizing persons in adults or children, detecting objects in the vehicle, determining whether one of the vehicle's door is open, or the like.

Perceiving the depth of the vehicle cabin is an important aspect for interior sensing. Beyond the information a 2D camera image can provide, it gives confidence in the spatial position of people, animals and objects in the car and enables features such as vision-based passenger airbag control and other safety systems.

Estimating depth information purely from a (2D) mono-camera image is possible with state-of-the-art machine learning techniques. These methods can only deliver relative, qualitative depth estimates, i.e., that the steering wheel is closer than the driver who is closer than the rear seat. However, absolute depth estimates comparable to those of time of flight (ToF) or stereo cameras are required for high precision in certain applications.

### SUMMARY

Hence, there is a need for a depth estimation system.

In this context, methods, systems and computer program products are presented as defined by the independent claims.

In this respect, according to a first aspect a method for depth determination in a vehicle is provided. The method comprises determining, based on image data obtained by an imaging system representing least a part of an interior of the vehicle, one or more points of interest; determining one or more characteristics associated with each determined point of interest, the one or more characteristics comprising a location and/or dimensions of each determined point of interest; generating, based on the determined points of interests and the associated characteristics, a reference depth map of the vehicle interior represented in the image data and generating, based on the image data and the reference depth map, a refined reference depth map.

In another aspect, a vehicle assistance system executing a vehicle control function is provided, comprising an imaging system and a data processing system, configured to perform the computer-implemented methods as described herein.

In another aspect, a vehicle is provided comprising a vehicle assistance system as described herein.

Finally, a computer program is presented that comprises instructions which, when the program is executed by a computer, cause the computer to carry out the methods described herein.

Further refinements are set forth by the dependent claims.

These and other objects, embodiments and advantages will become readily apparent to those skilled in the art from the following detailed description of the embodiments having reference to the attached figures, the invention not being limited to any particular embodiments.

### BRIEF DESCRIPTION OF THE FIGURES

Aspects and examples of the present disclosure are described with reference to the following figures, in which:
FIG. 1 shows the interior of a vehicle cabin with defined location points and persons.
FIG. 2 depicts a computer-implemented sequence for depth estimation refinement as disclosed herein.
FIG. 3 schematically illustrates a point of interest.
FIG. 4 schematically shows a defined location point.
FIG. 5 schematically illustrates characteristics associated with each determined point of interest.
FIG. 6 schematically depicts dimensions of defined body parts.
FIG. 7 schematically illustrates generating the refined reference depth by a machine-learning system.
FIG. 8 schematically shows generating the refined reference depth by a neural network.
FIG. 9 depicts a further sequence for depth estimation refinement as disclosed herein.
FIG. 10 illustrates a reference depth map and a refined reference depth map.
FIG. 11 schematically depicts an infrared camera and a gray value pixel image taken by the infrared camera.
FIG. 12 schematically illustrates pixel gray values corresponding to depth estimations.
FIG. 13 schematically depicts an infrared source as part of the imaging system.
FIG. 14 schematically shows various cameras being part of the imaging system.
FIG. 15 schematically shows a system for depth estimation.
FIG. 16 is a diagrammatic representation of internal components of a data processing system comprises by the system for depth estimation.
FIG. 17 schematically shows a vehicle comprising a system for depth estimation.

### DETAILED DESCRIPTION

The present disclosure relates to safety improvements for vehicles and, in particular, to methods and systems for depth estimation refinement for interior sensing.

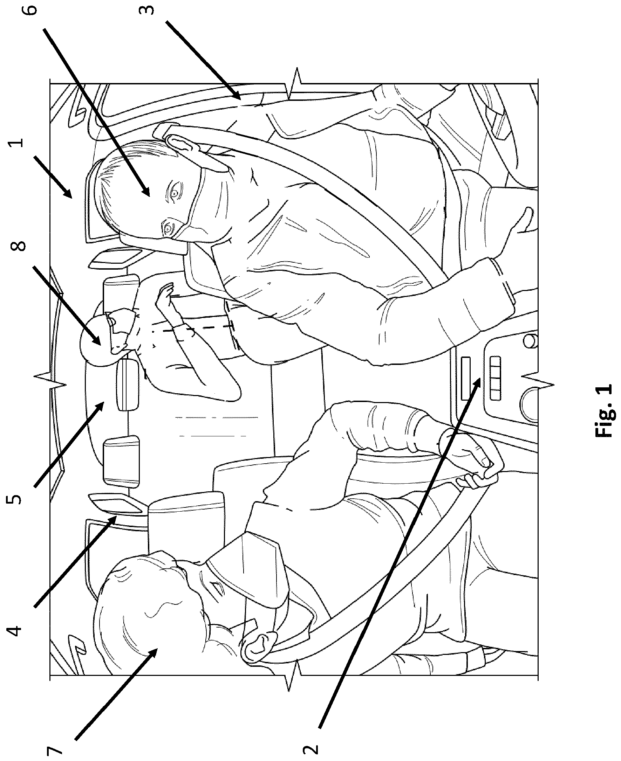

FIG. 1 depicts the interior of a cabin 1 of a vehicle as it is seen in a field-of-view of an imaging system installed in the cabin 1. In FIG. 1 the imaging systems which may comprise a camera, is located at the rear mirror at the front shield of the vehicle (not shown in FIG. 1). The interior cabin comprises one or more defined location points, such as a middle console 2, cabin pillars 3, 4 such as B-pillars or C-pillars, cabin windows such as rear window 5 and their corresponding components, such as lower window frames of one or more vehicle doors (not shown in FIG. 1). Said defined location points are positioned at different locations in the interior of cabin 1, and are therefore also located at different distances to the imaging system. To describe an example and as it can be seen from FIG. 1, the middle console 2 is located closer to the imaging system as the B-pillar 3 or the rear window 5.

Three persons 6, 7 and 8 are seated in the vehicle. Person 6 is seated in the driver seat of the vehicle, while person 7 is seated on the back seat and person 8 on the passenger seat next to the driver seat. Persons 6 and 7 are, since sitting on the front seats of the vehicle cabin 1, located at a smaller distance relative to the imaging system that person 8 sitting on the rear seat. Therefore, corresponding body parts of the persons 6, 7 and 8 are also located at different positions relative to the imaging system, such as the heads of persons 6 and 7 being located closer to the imaging system than the head of person 8.

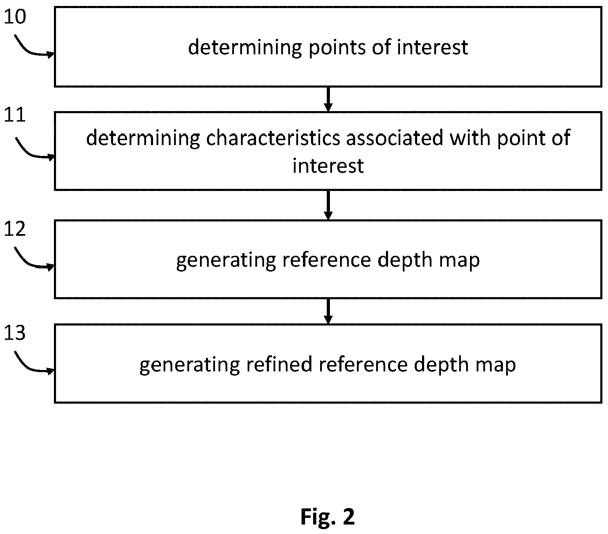

FIG. 2 is a basic flow chart of the method for depth estimation refinement in a vehicle as disclosed herein. The method determines 10, based on image data obtained by an imaging system representing least a part of an interior of the vehicle, one or more points of interest. The method further determines 11 one or more characteristics associated with each determined point of interest, the one or more characteristics comprising a location and/or dimensions of each determined point of interest. The method generates 12 based on the determined points of interests and the associated characteristics, a (sparse) reference depth map of the vehicle interior represented in the image data and further generates 13 based on the image data and the reference depth map, a refined reference depth map.

The method as shown in the flow chart of FIG. 2 generates, with the refined reference depth map, a more accurate reference depth map of the cabin 1 of the vehicle than the initial reference depth map. In particular, the refined reference depth map comprises more accurate values for the estimated depths for parts of the interior of cabin 1 as seen in the field of view of the imaging system and represented by the image data. In addition, the refined depth estimation may comprise depth estimation for parts of the interior of the cabin 1 for which no values exist in the (sparse) reference depth map.

The refined reference depth map may generally be used for passenger safety controls within the vehicle executed by a vehicle assistance system, for example for dynamic passenger airbag (de-) activation such as in the case when a passenger in the vehicle, such as person 6, 7 or 8, is to lean forward in his or her seat, bringing the head very close to the dashboard. The more accurate depth estimation is further be used to detect the behavior of the passenger, such as persons 6, 7 and 8 and determine their corresponding distances to the airbag. Accordingly, the airbag could be deactivated for a short period of time or the behavior of dual/multi-stage airbags could be optimized to account for the very short distance.

The method as shown in the flow chart of FIG. 2 may also be used for refined gesture recognition and for 3D human pose estimation. As compared with 2D gesture recognition, additional depth information can help expand the set of detectable gestures to a three-dimensional space. Further, by not only relying on a two-dimensional camera image, an additional depth input simplifies the task of 3D human pose estimation.

The method as shown in the flow chart of FIG. 2 may also be generally used for vehicle control functions within the vehicle executed by a vehicle assistance system, to improves and optimize various vehicle control algorithms/features including but not limited to object detection, seat belt status recognition, seat occupancy classification, hands-on-wheel recognition, baby/child seat placement.

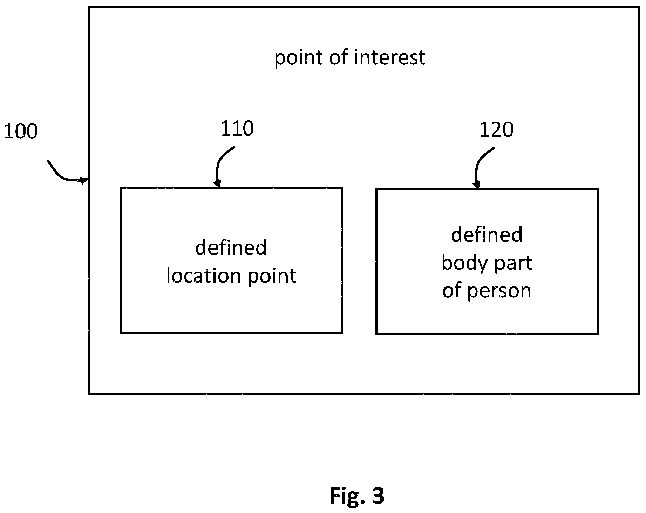

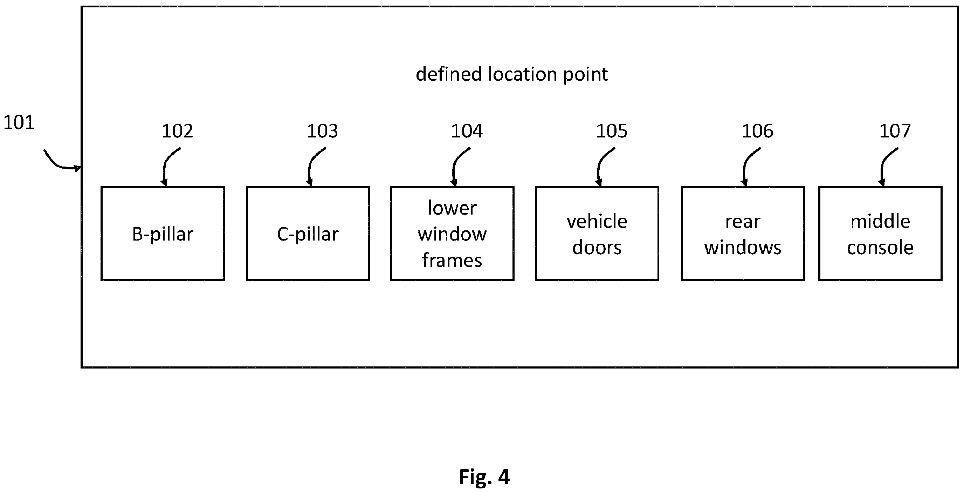

In some embodiments and as shown in FIG. 3, the one or more points of interest 100, or depth cues, comprise defined location points 110 in the vehicle and/or a defined body part of a person 120 in the vehicle. Further, in some embodiments, and as shown in FIG. 4, the defined location points 110 comprise fixed known cabin points, e.g. if the vehicle is a car, such as at least one of a section of a B-pillar 102 of the vehicle, a section of a C-pillar 103 of the vehicle, one or more lower window frames 104 of one or more vehicle doors 105, one or more rear windows 106, a middle console 107 of the vehicle. Referring to FIG. 1 an example for a B-pillar 102 and for a C-pillar 103 is shown by the B-pillar 3 and the C-pillar 4 of the cabin 1, respectively. Further, an example for one or more rear windows 106 is shown in FIG. 1 by rear window 5. An example for a middle console 107 is illustrated in Fig. 1 by middle console 2. An example for a defined body part of a person 120 is shown in FIG. 1 with the heads of persons 6, 7, and 8.

The position of the defined location points within the cabin may be derived e. g. from a CAD model of the cabin 1 of the vehicle.

The defined locations point 110 as well as the defined body part of a person 120 may define absolute distance values for certain portions in an image taken by the imaging system, such as the image shown in FIG. 1. This enables the determination of depth relations for other portions of the image. The portion of the image may be represented by one or more pixels, with an array of pixels forming the image. A defined depth relation may then be associated with a certain pixel of the image, forming the basis for depth estimations for the remaining pixels of the image.

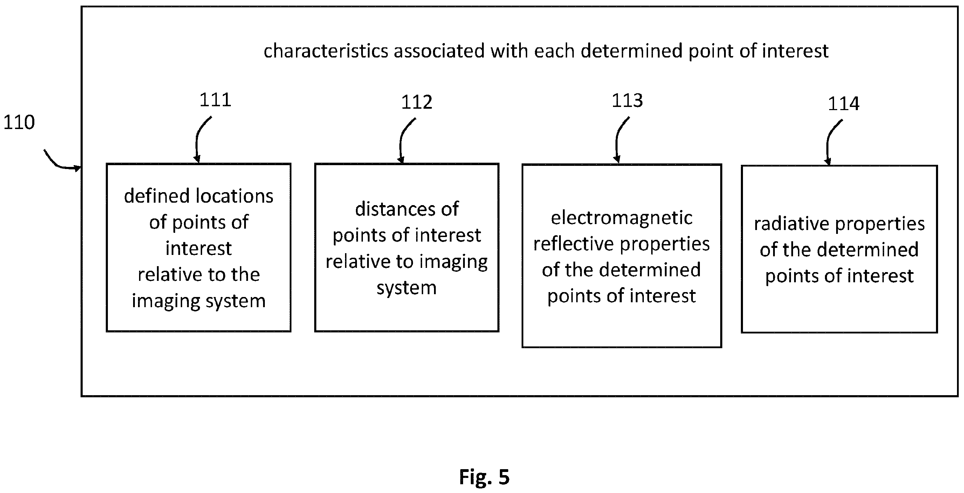

In some embodiments and as shown in FIG. 5, the characteristics 110 comprise information about at least one of: defined locations 111 of the determined points of interest relative to the imaging system, distances 112 of the determined points of interest relative to the imaging system, electromagnetic reflective properties 113 of the determined points of interest, radiative properties 114 of the determined points of interest. Referring again to FIG. 1, the defined locations 111 are illustrated e. g. of the locations of the middle console 2 relative to the imaging system, as well as the locations of the B-pillar 3, the C-pillar 4 and the rear window 5 relative to the imaging system. FIG. 1 shows, as an example, that the middle console 2 as well as the rear window 5 are located in such a way relative to the imaging system, that they appear in the middle lower and upper portions of the image respectively. On the other hand, the B-pillar 3 and the C-pillar 4 are located relative to the imaging system in such a way that they appear in the middle right and upper left portion of the image, respectively. Referring again to FIG. 1, the middle console 2, as an example, is located closer to the imaging system than rear window 5. As already mentioned earlier within this disclosure, the various locations may be derived from a CAD-model of the cabin 1. The defined locations and the distances relative to the imaging system can further be used to locate reference points in the cabin 1. As also mentioned earlier and referring to FIG. 1, the heads of persons 6 and 7 sitting on the front seats are located closer to the imaging system than the head of person 8 sitting on the back seat of the vehicle.

The electromagnetic reflective properties e. g. to the light emitted by an infrared source of some components in the interior of the cabin 1, such as e. g. the B-pillar 3 and the C-pillar 4 of FIG. 1, can also be used to locate reference points in the cabin. While detecting specific grey values will be prone to error due to the changing influence of light sources outside the vehicle, certain parts of the cabin 1 with full reflectivity to infrared light will always stand out, as this leads to value clipping e. g. in a pixel-image taken by the imaging system. The position of these parts, such as the B-pillar 3 and the C-pillar 4, can be used as reference points with known distance to the imaging system. Furthermore, reference points with maximal infrared reflectivity could be deliberately added to the cabin 1. As these points do not have to be highly reflective in the visible electromagnetic spectrum, they do not need to be visible and possibly disruptive for the passengers inside the cabin 1, such as persons 6, 7 and 8.

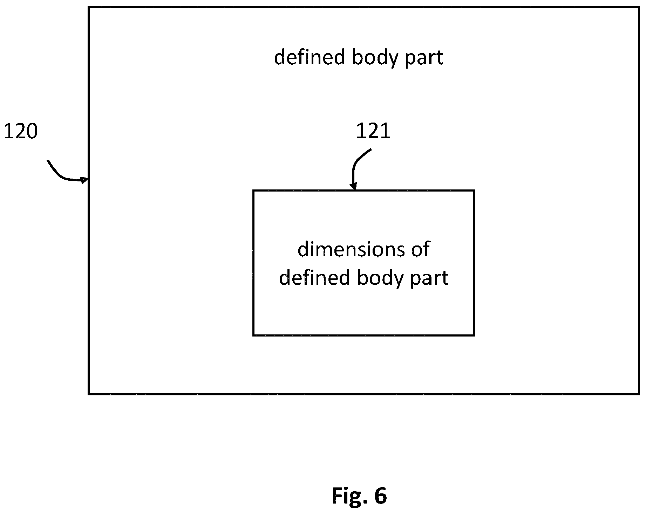

In some embodiments and as shown in FIG. 6, the defined body part 120 comprises one or more dimensions 121 of the defined body part. Referring again to FIG. 1, the dimensions may comprise the dimensions of the head of persons 6, 7, and 8. While size and volume of different human bodies can vary, certain physical limits apply to the size of body parts. Furthermore, the relationship of sizes (e.g., the length of the upper compared to the lower arm) can be assumed to be constant without creating to large an error.

For depth estimation relating to a vehicle cabin, both the absolute size and the relationship of sizes of different body parts of a person can be beneficial. A precise measurement of a defined body part of a person 120 such as the head dimensions of e. g. persons 6, 7, and 8 can deliver additional information about absolute sizes and distances in the cabin 1 of the vehicle. Together with known dimensions of the defined location points 110 in the cabin 1 this additional information can also be used to determine refined depth relations e. g. or all pixels of the image taken by the imaging system. In addition, human body kinematics may be included for depth estimation. Particular formulations of kinematic models for describing human body motions exist and are available to the skilled person, which can support 3D and/or 2D body pose estimation algorithms in producing accurate results, which in turn can contribute to depth estimation through precise body dimensions and orientation.

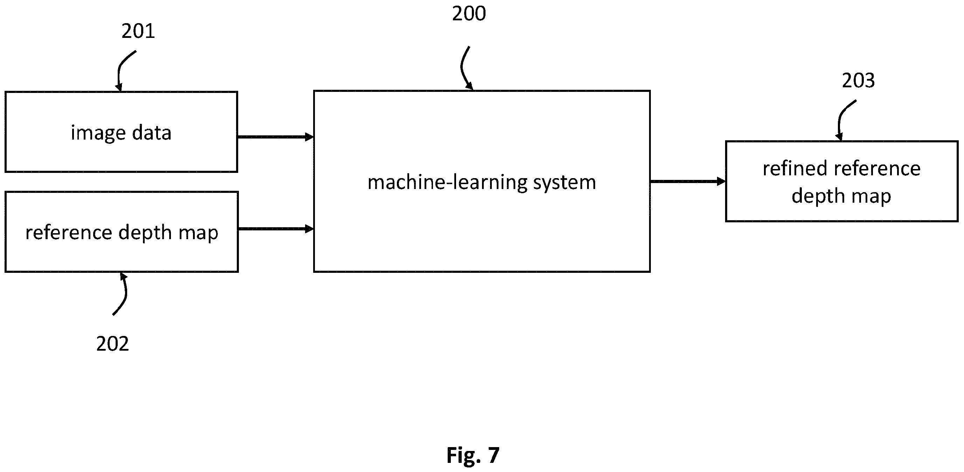

In some embodiments and as depicted in FIG. 7, generating the refined reference depth map 203 comprises processing the image data 201 /or and the reference depth map 202 by a machine-learning system 200, thereby reducing the likelihood of an incorrect depth estimation. The machine-learning system 200 may comprise neural networks and/or supervised learning and/or unsupervised learning and/or reinforcement learning and/or decision trees. In some further embodiments, reference depth map 202 may be feed directly as an additional layer with the image data 201 obtained by the imaging system. The reference depth map 202 may be scaled to the same size as the input image defined by the image data 201 This requires a minimal adjustment to the sequence as shown in FIG. 1. In some embodiments, the reference depth map 202 may be injected into some deeper layer of the machine-learning system 200. Adding the reference depth map 202 next to input channel of the machine-learning system 200 may cause the system 200 to ignore the map 202, so adding it in a deeper layer is likely better (early / in-network fusion). This approach may be used in the training process of the machine-learning system 200.

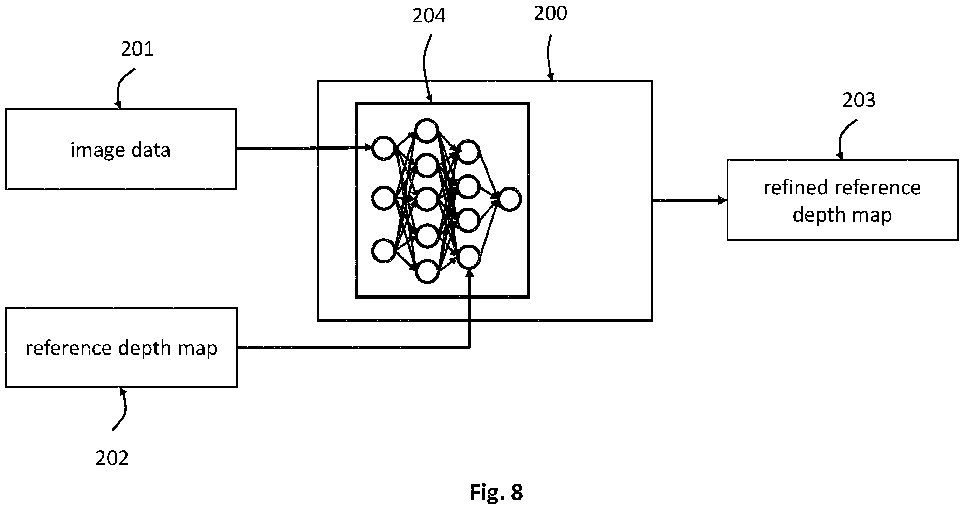

In some embodiments and as shown in FIG. 8, machine learning system 200 comprises a deep learning neural network 204 and generating the refined reference depth 203 map comprises injecting the reference depth map 202 in a deeper layer of the deep learning neural network 204. The neural network 204 may comprise an input layer, at least one hidden layer and one output layer. For the sake of simplicity, in FIG. 8 only two hidden layers are shown for the neural network 204. As shown exemplarily in FIG. 8, the image data 201 is input into the input layer and the reference depth map 202 is input into the second hidden layer of neural network 204. As already indicated within this disclosure, this ensures that the neural network 204 does not ignore the reference depth map 202 in the process of generating the refined reference depth map 203.

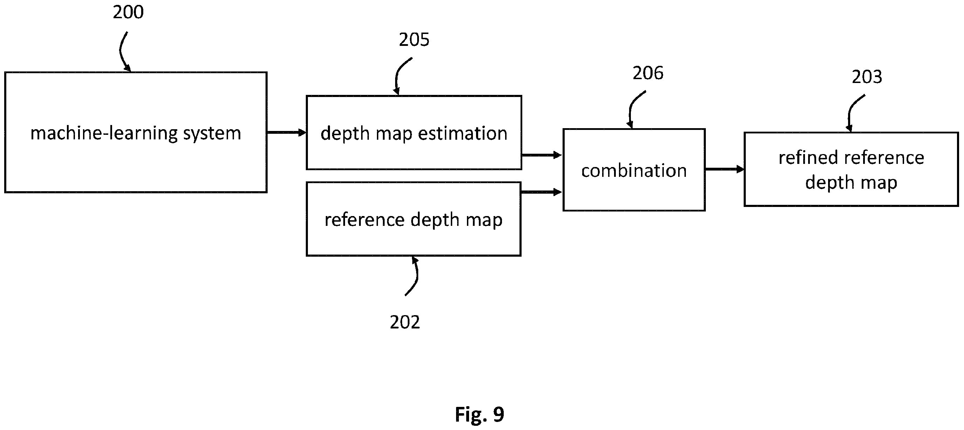

In some embodiments and as illustrated in FIG. 9, generating the refined reference depth map 203 comprises generating, by the machine learning system 200 based on the image data 201, a depth map estimation 205 comprising calculated depth indications of the vehicle interior represented in the image data 201 and combining 206, the depth map estimation and the reference depth map 202. Combination 206 may be executed as a post processing activity after the execution of the machine-learning system 200. This enables error minimization between reference depth map 202 and refined reference depth map 203. Combination 206 may be executed by e. g. applying registration methods like an Iterative Closest Point-method (ICP) between known points in the reference depth map 202 and the depth map estimation 205. Although this implementation is a post-processing step intended for a standalone application, such aspects as point registration and refinement could also be integrated into the training and possibly actively improve depth estimation.

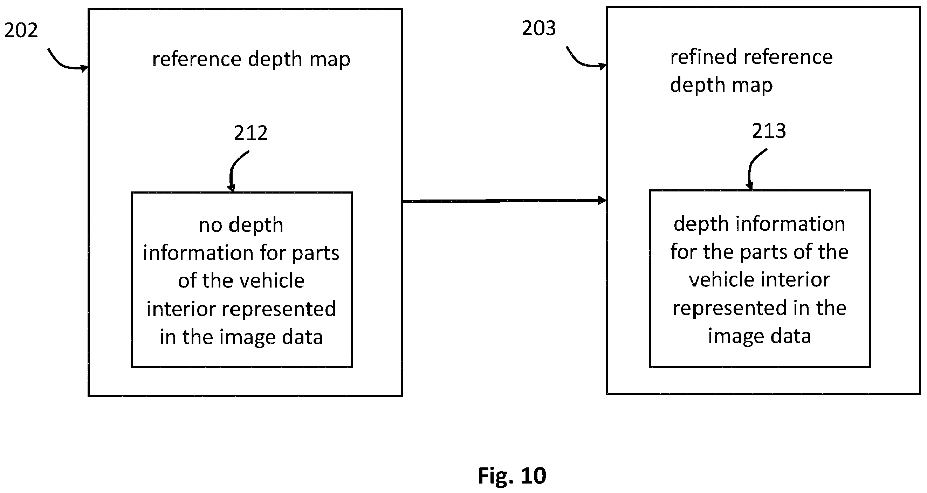

In some embodiments, and as shown in Fig. 10, the (sparse) reference depth map 202 comprises 212 no depth information for parts of the vehicle interior represented in the image data 202, and generating the refined reference depth map 203 comprises 213 depth information for the parts of the vehicle interior represented in the image data 201. The information gathered from the different points of interest 100 may be aggregated by the method of FIG. 2 into a (sparse) reference depth map 202. This could be a matrix-shaped representation of numerical values describing the distance of a point in the cabin 1 to the imaging system, such as a camera, aligned with the size of e. g. the camera image. For regions in which no reference depth value could be determined using the method of FIG. 2, a nonnumerical value (None, NaN etc.) or defined specific numerical value (maxint, -1 etc.) should be used to indicate the fact that e. g. the corresponding matrix element does not contain any (initial) depth estimations. The generation of the refined reference depth map 203 may then generate depth estimations also for those parts of the vehicle interior represented in the image data 201 for which no such (initial) initial depth estimations have existed so far. On the other hand, the indication could be employed to mask out those regions when e. g. using the (initial) reference depth map 202 in the machine learning model 200 (such as a form of neural network 204) for input processing and/or loss calculation, restricting the focus of the machine-learning model 200 to the relevant regions of the interior of the cabin 1.

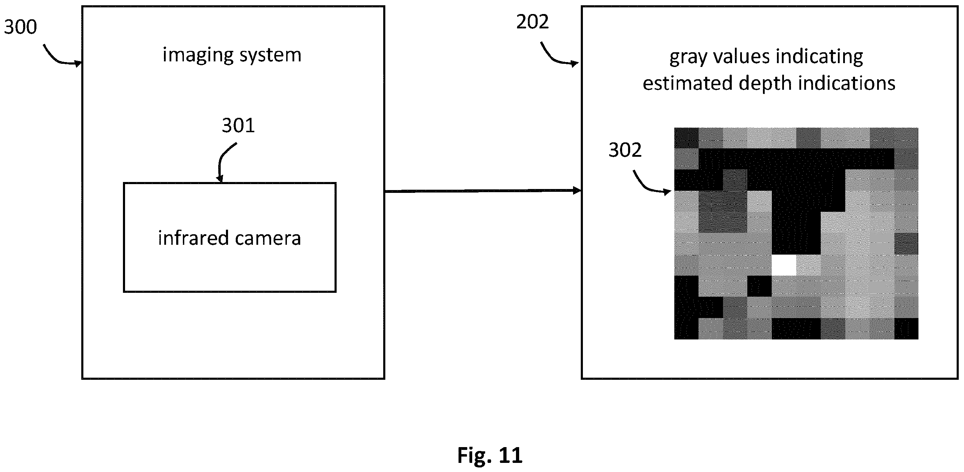

In some embodiments and as shown in FIG. 11, the at least two of the one or more points of interest 100 comprise surfaces of the same material and the imaging system 300 comprises an infrared camera 301. The reference depth map 202 generated from the image data taken by the infrared camera comprises gray values 302 indicating estimated depth indications of the vehicle interior shown in the image. A difference of the location of the surfaces of the same material in the vehicle corresponds to a difference of the corresponding gray values 302 of the pixels of the image. The difference of the corresponding gray values and/or the corresponding gray values forms part of the information about the location of the least two of the one or more defined location points comprising the surfaces of the same material.

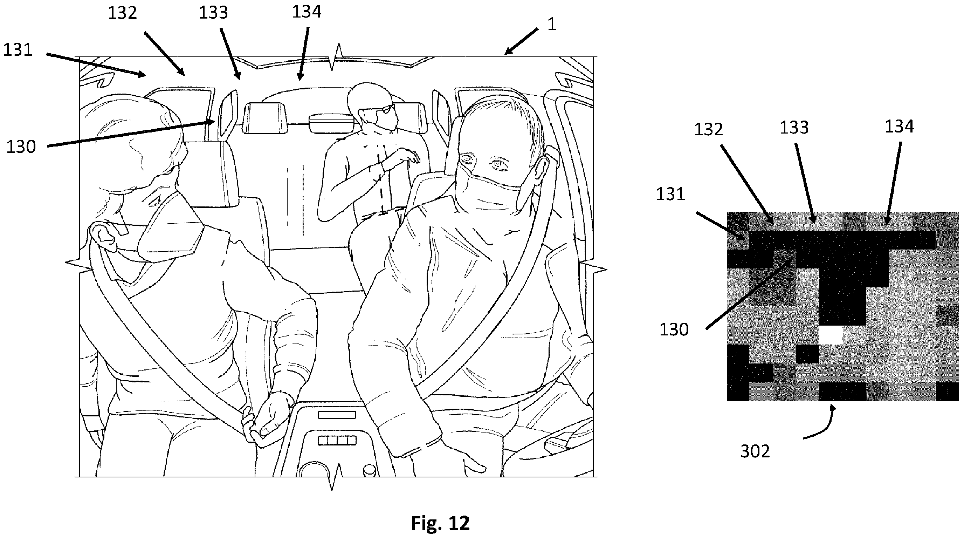

FIG. 12 depicts on its left the interior of the cabin 1 of FIG. 1, as seen e. g. through an infrared camera 301 generating an image comprising of the gray values 302. In FIG. 12, five different points 130, 131, 132, 133, 134 are shown with each of these points being located at a different distance to the infrared camera 301. For example, point 130 may be located at a distance of 1.4 m from the infrared camera 301, point 131 at a distance of 1.1 m, point 132 at a distance of 1.2 m, point 133 at a distance of 1.9 m and point 134 at a distance of 2.1 m. Each of these distances correspond to a different gray value 302 of the corresponding pixel image of the infrared camera 301, as shown on the right of FIG. 12, indicating a different depth estimate for the points 130 to 134 of the vehicle interior. The distance of certain surfaces on the interior of the cabin 1 to the infrared camera can therefore be estimated following the propagation of the corresponding infrared electromagnetic waves which are scattered at these surfaces, such as the surfaces of points 130 to 134.

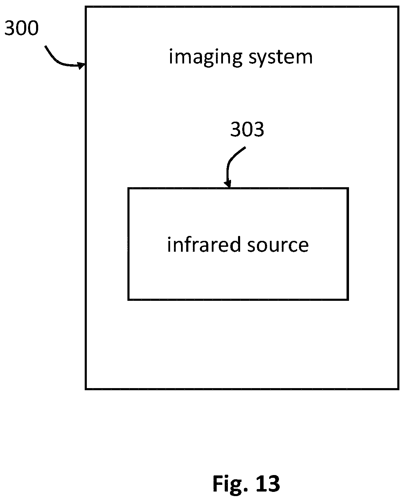

In some embodiments and as shown in FIG. 13, the image data are generated by the imaging system 300 by illuminating at least one of the points of interest. Referring to FIG. 12, as an example, points 130 to 134 of the interior of cabin 1 may be illuminated by an infrared light source 303. This enhances the accuracy of the depth estimation as the reflective properties of points in the interior of the vehicle cabin 1 to infrared light emitted by the infrared source 303, such as the reflective properties of the B- and C-pillars 102 and 103 or window frames 104 are used for the depth estimation. While detecting specific grey values will be prone to error due to the changing influence of light sources outside the cabin 1 of the vehicle, certain parts of the cabin 1 with full reflectivity to infrared light will constantly stand out when the infrared illumination of these parts is kept constant by using an infrared light source, such as source 303. This leads to value clipping in the pixel image 302 of the source 301. As long as the position of such illuminated parts is unchangeable, these parts can be readily used as reference points with known distance to the infrared camera 301. Furthermore, reference points with maximal infrared reflectivity could be deliberately added for the depth estimation. As they don't need to be highly reflective in the visible electromagnetic spectrum, they do not need to be visible and possibly disruptive for the driver and the passengers sitting in the cabin 1.

In some embodiments, the ambient light portion of the image captured by the imaging system is suppressed. In some embodiments, the ambient light gets suppressed by using a filter. Filtering can be used to remove specific wavelengths of light that are known to be emitted by ambient light sources. For example, an infrared camera may include a filter that removes visible light, which is a common source of ambient light interference. In some embodiments, the ambient light gets suppressed by time gating or spatial gating. Time gating involves only acquiring images at specific times, when the ambient light level is low. This can be accomplished by using a fast-switching filter or by using a pulsed light source. Spatial gating involves only acquiring images from specific regions of the field of view, where the ambient light level is low. This can be accomplished by using a spatial light modulator or by using a mask to block out unwanted light. In some embodiments, ambient light gets suppressed by modulating the intensity of the infrared light source 303, and then demodulating the received signal to extract the desired information. This can be used to reject ambient light that is not modulated.

RGB-IR sensors provide a significant advantage as it allows to capture both day and night images with the same sensor. An RGB-IR image sensor works in both ranges: visual spectrum range and IR spectrum range. By committing typically 25% of its pixel array pattern to infrared (IR) and 75% to RGB, the RGB-IR sensor can simultaneously capture both RGB and IR images. An RGB-IR image sensor does not have any dedicated filter to improve the quality of the signal: it measures everything and extracts both images IR and RGB. This causes some optical issues because the signals in both IR and RGB domains are contaminated. All the pixels in the pixel array of the RGB-IR sensor are receptive to IR signal. It means that not only the IR pixels are receptive to the IR signal but also the RGB pixels. Furthermore, the IR pixels also receive a small amount of visible light signal. In automotive industry, infrared signals play a key role in automated image processing applications like surveillance and driver monitoring. Usually, these applications require pure infrared images, and they cannot work on raw RGB-IR inputs.

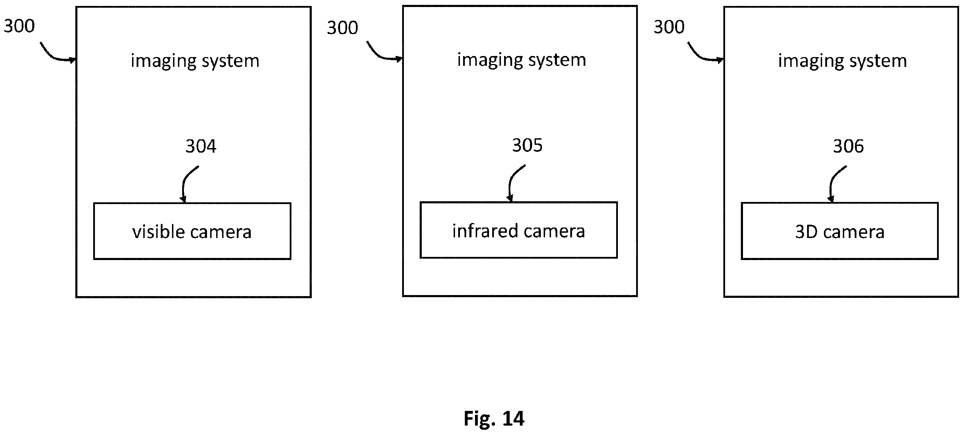

In some embodiments and as shown in FIG. 14, the imaging system 300 comprises a camera operating in the visible 304 and/or the infrared 305 electromagnetic spectrum and/or a 3D-camera 306. Separate cameras operating in the visible and infrared electromagnetic spectrum enable the provision of images based on the pure visible spectrum and pure infrared images.

As an example for a 3D-camera 306, an indirect time-of-flight (iToF) sensor may be used. By using the pixel image generated by an indirect time-of-flight sensor, a very low-resolution reference depth image could be added to the system. It could be used directly in the embodiments shown in and described for FIG. 7 and 8 and may be used additionally as a plausibility check for safety critical applications like determining the torso and head distance of a person from an airbag.

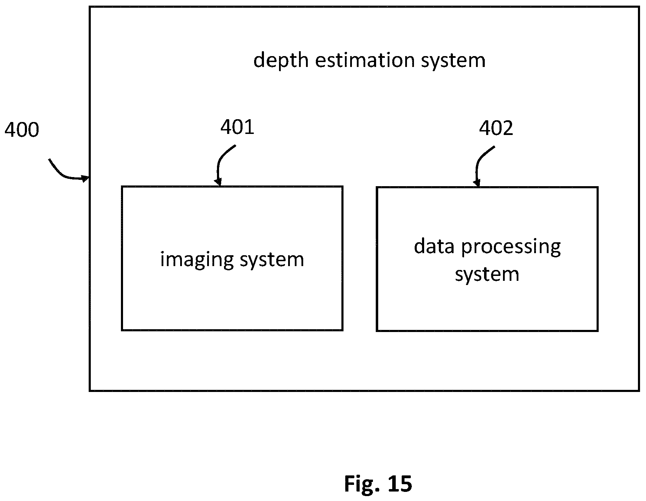

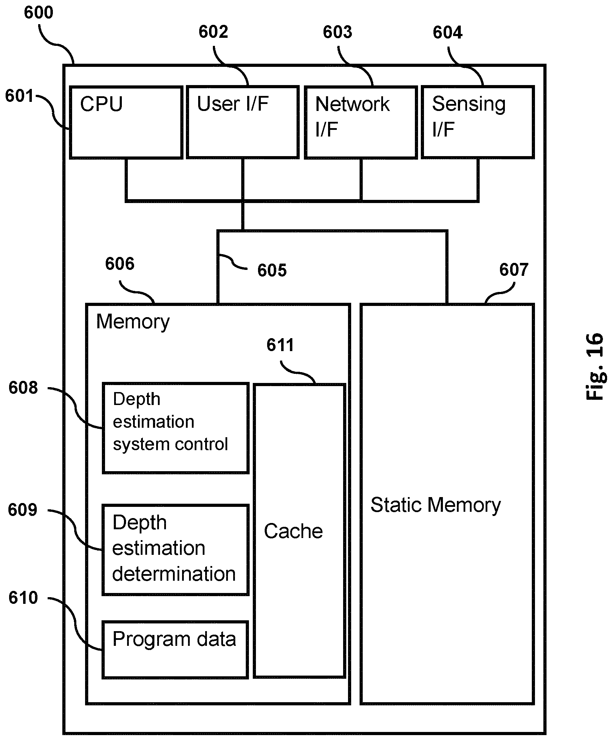

According to an aspect, a system 400 for vehicle assistance is provided, comprising, as shown in FIG. 15, an imaging system 401 and a data processing system 402, the system being configured to perform any one of the computer-implemented methods as described in the preceding paragraphs. FIG. 16 is a diagrammatic representation of internal components of a data processing system 600 implementing the functionality as described herein, such as data processing system 402 of FIG. 15. The data processing system 600 may be located in the vehicle and includes at least one processor 601, a user interface 602, a network interface 603 and a main memory 606, that communicate with each other via a bus 605. Optionally, the data processing system 600 may further include a static memory 607 and a disk-drive unit (not shown) that also communicate with each via the bus 605. A video display, an alpha-numeric input device and a cursor control device may be provided as examples of user interface 602.

Furthermore, the data processing system 600 may also comprise a specified sensing interface 604 to communicate with imaging system 300 of the vehicle. Alternatively, the data processing system 600 may communicate with the imaging system 300, 401 via the network interface 603. The imaging system 300, 401 is used for generating interior cabin data for depth estimation. The data processing system 600 may also be connected to database systems (not shown) via the network interface, wherein the database systems store at least part of the images needed for providing the functionalities described herein.

The main memory 606 may be a random-access memory (RAM) and/or any further volatile memory. The main memory 606 may store program code for the depth estimation system control 608 and the determination of a correct depth estimation 609. The memory 606 may also store additional program data required for providing the functionalities described herein. Part of the program data 610, the determination of a correct depth estimation 609 and/or the depth estimation system control 608 may also be stored in a separate, e.g. cloud memory and executed at least in part remotely. In such an exemplary embodiment, the memory 606 may store the depth estimations and the revised depth estimations according to the methods described herein in a cache 611.

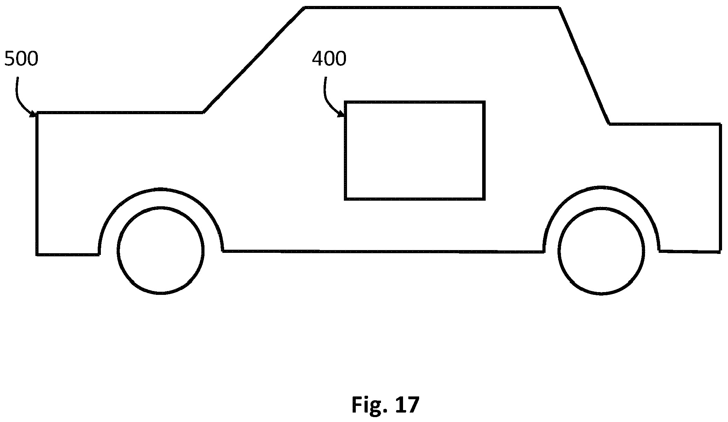

According to an aspect, as shown in FIG. 17, a vehicle 500 is provided comprising the vehicle assistance system 400 as described in the preceding paragraphs executing any one of the methods as described within the present disclosure. Within the present disclosure, the term "vehicle" includes all type of vehicles, such as a car, an autonomous car, a streetcar, a railway-car etc.

According to an aspect, a computer program comprising instructions is provided. These instructions, when the program is executed by a computer, cause the computer to carry out the methods described herein. The program code embodied in any of the systems described herein is capable of being individually or collectively distributed as a program product in a variety of different forms. In particular, the program code may be distributed using a computer readable storage medium having computer readable program instructions thereon for causing a processor to carry out aspects of the embodiments described herein.

Computer readable storage media, which are inherently non-transitory, may include volatile and non-volatile, and removable and non-removable tangible media implemented in any method or technology for storage of information, such as computer-readable instructions, data structures, program modules, or other data. Computer readable storage media may further include random access memory (RAM), read-only memory (ROM), erasable programmable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer.

A computer readable storage medium should not be construed as transitory signals per se (e.g., radio waves or other propagating electromagnetic waves, electromagnetic waves propagating through a transmission media such as a waveguide, or electrical signals transmitted through a wire). Computer readable program instructions may be downloaded to a computer, another type of programmable data processing apparatus, or another device from a computer readable storage medium or to an external computer or external storage device via a network.

It should be appreciated that while particular embodiments and variations have been described herein, further modifications and alternatives will be apparent to persons skilled in the relevant arts. In particular, the examples are offered by way of illustrating the principles, and to provide a number of specific methods and arrangements for putting those principles into effect.

In certain embodiments, the functions and/or acts specified in the flowcharts, sequence diagrams, and/or block diagrams may be re-ordered, processed serially, and/or processed concurrently without departing from the scope of the invention. Moreover, any of the flowcharts, sequence diagrams, and/or block diagrams may include more or fewer blocks than those illustrated consistent with embodiments of the invention.

The terminology used herein is for the purpose of describing particular embodiments only and is not intended to be limiting of the embodiments of the disclosure. It will be further understood that the terms "comprise" and/or "comprising," when used in this specification, specify the presence of stated features, integers, steps, operations, elements, and/or components, but do not preclude the presence or addition of one or more other features, integers, steps, operations, elements, components, and/or groups thereof. Furthermore, to the extent that the terms "include", "having", "has", "with", "comprised of", or variants thereof are used in either the detailed description or the claims, such terms are intended to be inclusive in a manner similar to the term "comprising".

While a description of various embodiments has illustrated all of the inventions and while these embodiments have been described in considerable detail, it is not the intention of the applicants to restrict or in any way limit the scope of the appended claims to such detail. Additional advantages and modifications will readily appear to those skilled in the art. The invention in its broader aspects is therefore not limited to the specific details, representative apparatus and method, and illustrative examples shown and described. Accordingly, the described embodiments should be understood as being provided by way of example, for the purpose of teaching the general features and principles, but should not be understood as limiting the scope, which is as defined in the appended claims.

## Claims

1. A computerized method of depth determination in a vehicle, the method comprising:
- determining, based on image data obtained by an imaging system representing least a part of an interior of the vehicle, one or more points of interest;
- determining one or more characteristics associated with each determined point of interest, the one or more characteristics comprising a location and/or dimensions of each determined point of interest;
- generating, based on the determined points of interests and the associated characteristics, a reference depth map of the vehicle interior represented in the image data and
- generating, based on the image data and the reference depth map, a refined reference depth map.

2. The method of claim 1, wherein the one or more points of interest comprise defined location points in the vehicle and/or a defined body part of a person in the vehicle.

3. The method of claim 2, wherein the defined location points comprise at least one of a section of a B-pillar of the vehicle, a section of a C-pillar of the vehicle, one or more lower window frames of one or more vehicle doors, one or more rear windows, a middle console of the vehicle.

4. The method of any one of the preceding claims, wherein the characteristics comprise information about at least one of:
- defined locations of the determined points of interest relative to the imaging system,
- distances of the determined points of interest relative to the imaging system,
- electromagnetic reflective properties of the determined points of interest,
- radiative properties of the determined points of interest.

5. The method of any one of claims 2 to 4, wherein the defined body part comprises one or more dimensions of the defined body part.

6. The method of any one of the preceding claims, wherein generating the refined reference depth map comprises processing the image data/or and the reference depth map by a machine-learning system.

7. The method of claim 6, wherein the machine learning system comprises a deep learning neural network and generating the refined reference depth map comprises injecting the reference depth map in a deeper layer of the deep learning neural network.

8. The method of any one of the claims 6 to 7, wherein generating the refined reference depth map comprises:
- generating, by the machine learning system based on the image data, a depth map estimation comprising calculated depth indications of the vehicle interior represented in the image data; and
- combining the depth map estimation and the reference depth map.

9. The method of any one of the preceding claims, wherein
• the reference depth map comprises no depth information for parts of the vehicle interior represented in the image data; and
• wherein generating the refined reference depth map comprises depth information for the parts of the vehicle interior represented in the image data.

10. The method of any one of the preceding claims, wherein
• at least two of the one or more points of interest comprise surfaces of the same material;
• the imaging system comprises an infrared camera, wherein the reference depth map generated from the image data taken by the infrared camera comprises gray values indicating estimated depth indications of the vehicle interior shown in the image;
• wherein a difference of the location of the surfaces of the same material in the vehicle corresponds to a difference of the corresponding gray values; and
• the difference of the corresponding gray values and/or the corresponding gray values forms part of the information about the location of the least two of the one or more defined location points comprising the surfaces of the same material.

11. The method of any one of the preceding claims, wherein the image data are generated by the imaging system by illuminating at least one of the points of interest.

12. The method of any one of the preceding claims, wherein the imaging system comprises a camera operating in the visible and/or the infrared electromagnetic spectrum and/or a 3D-camera.

13. A vehicle assistance system for executing a vehicle control function, the vehicle assistance system comprising:
- an imaging system sensing an interior of a vehicle;
- a data processing system;
configured to perform the computer-implemented methods of any one of claims 1 to 12.

14. A vehicle comprising the system of claim 13.

15. A computer program product comprising instructions, which, when executed on a computer, cause the computer to perform the method any one of claims 1 to 12.
